# EUROPÄISCHE PATENTSCHRIFT

(11) **EP 2 217 783 B1**
(45) Veröffentlichungstag und Bekanntmachung des Hinweises auf die Patenterteilung: **29.02.2012**
(21) Anmeldenummer: 08847474.7
(22) Anmeldetag: 05.11.2008
(51) Int. Cl.: E05F 15/10, E05F 15/12, F16D 41/20

(54) **ANTRIEBSSYTEM FÜR EIN VERSCHLIESSTEIL EINES KRAFTFAHRZEUGS**
DRIVE SYSTEM FOR A CLOSING PART OF A MOTOR VEHICLE
SYSTÈME D'ENTRAÎNEMENT POUR UNE PIÈCE DE VERROUILLAGE D'UN VÉHICULE AUTOMOBILE

(30) Priorität: 07.11.2007 DE 202007015597 U
(43) Veröffentlichungstag der Anmeldung: 18.08.2010
(73) Patentinhaber: Brose Schliesssysteme GmbH & Co. KG, 42369 Wuppertal (DE)
(72) Erfinder: STANIC, Ivica, 41542 Dormagen (DE); DÖRNEN, Jörg, 58339 Breckerfeld (DE); CHECRALLAH, Kachouh, 44227 Dortmund (DE)
(74) Vertreter: FDST Patentanwälte
(86) Internationale Anmeldenummer: PCT/EP2008/009306
(87) Internationale Veröffentlichungsnummer: WO 2009/059747

(56) Entgegenhaltungen:
- WO-A-2007/056009
- DE-A1-102004 047 314
- DE-C2- 19 581 600
- US-A- 4 778 138

## Beschreibung

Die Erfindung betrifft ein Antriebssystem zur automatischen Betätigung eines Verschließteils eines Kraftfahrzeuges gemäß dem Oberbegriff des Anspruchs 1. Ein derartiges Antriebssystem ist z.B. aus der DE 10 2004 047 314 A1 bekannt. Unter Verschließteil wird hierbei ein Karosserieteil verstanden, das zwischen einer Öffnungsposition und einer Schließposition entlang eines Verstellweges verstellbar ist. Ein derartiges Verschließteil ist insbesondere ein Heckdeckel oder eine Heckklappe, beispielsweise aber auch eine Seitentür, ein Sitz, ein Motorraumdeckei oder ein Cabriodach, eines Kraftfahrzeuges.

Ein derartiges Antriebssystem umfasst primär einen Elektromotor, dessen Drehmoment, insbesondere über ein nachgeschaltetes Übersetzungsgetriebe, derart bemessen ist, dass das Verschließteil infolge eines Steuerbefehls zwischen einer Schließposition entlang eines Verstellweges in eine Öffnungsposition verstellbar ist. Um das Verschließteil in praktisch beliebiger Position entlang des Verstellweges auch bei ausgeschaltetem Elektromotor in der jeweils angefahrenen Position zu halten, sind zumindest bei einem nicht selbsthemmenden Antrieb bzw. Getriebe ein einzelnes oder mehrere Federelemente vorgesehen, deren Federkraft oder Federkonstante auf die Rückstellkraft des Verschließteils, insbesondere auf dessen Gewichtskraft, eingestellt ist.

Erkanntermaßen ändert sich, insbesondere bei einem Heckdeckel oder einer Heckklappe eines Kraftfahrzeuges, die Länge des Hebelarmes, an der die Gewichts- oder Rückstellkraft des Verschließteils angreift, entlang des Verstellweges. Um sich diesen ändernden Kräfteverhältnissen in Abhängigkeit vom Öffnungs- bzw. Schließwinkel des Verschließteils zumindest annähernd anzupassen, ist es beispielsweise aus der DE 20 2005 007 155 U1 und aus der DE 20 2005 003 466 U1 bekannt, in ein solches Verstell- oder Antriebssystem eine Anzahl von Federelementen in Reihen- und/oder Parallelschaltung einzusetzen. Eine bei dem bekannten Verstellsystem zwischen dem Elektromotor und einem Getriebe eingesetzte Bremse ermöglicht dabei, dass die Bremswirkung sowohl durch eine manuelle Krafteinwirkung auf die dortige Heckklappe
als auch durch elektromotorische Kraft des Elektromotors aufhebbar ist. Hierdurch soll gewährleistet sein, dass das Verschließteil aus jeder beliebigen Position entlang des Verstellweges auch bei ausgeschaltetem Elektromotor manuell zumindest in die Schließposition verstellt werden kann.

Aus der WO 2007/014686 A1 (PCT/EP2006/007391) ist es bekannt, bei einer Verstelleinrichtung für ein Kraftfahrzeug ein antriebsseitig mit einem Antrieb und abtriebsseitig mit einem Verstellelement gekoppeltes, als Bremse oder Kupplung wirksames Kupplungssystem mit einem nach Art einer Spreiz- oder Schlingfeder wirksamen Reibschlusselement vorzusehen. Infolge eines abtriebsseitig wirksamen Verstellmomentes kann eine Blockierung des gegen eine rotationssymmetrische Berührungs- oder Reibfläche verspannten Reibschlusselementes gelöst werden, so dass das entsprechende Verstellelement manuell betätigt werden kann.

Der Erfindung liegt die Aufgabe zugrunde, für ein Verschließteil eines Kraftfahrzeuges ein möglichst kompaktes Antriebssystem anzugeben, welches einerseits das automatisch betätigbare Verschließteil auch bei ausgeschaltetem elektrischem Antrieb (Elektromotor) in praktisch beliebiger Position entlang dessen Verstellweges zuverlässig hält und andererseits auf einfache Art dessen manuelle Betätigung ermöglicht.

Diese Aufgabe wird erfindungsgemäß gelöst durch die Merkmale des Anspruchs 1. Vorteilhafte Ausgestaltungen, Weiterbildungen und Varianten sind Gegenstand der Unteransprüche.

Hierzu umfasst das Antriebssystem zur automatischen Betätigung eines Verschließteils, insbesondere einer Heckklappe oder eines Heckdeckels, eines Kraftfahrzeuges ein antriebsseitig mit einem Elektromotor und abtriebsseitig mit dem Verschließteil gekoppeltes Kupplungssystem. Dieses umfasst ein erstes Reibschlusselement und ein zweites Reibschlusselement, die jeweils nach Art einer Spreiz- oder Schlingfeder wirksam sind. Das erste Reibschlusselement ist gegen eine korrespondierende Berührungs- oder Reibfläche eines feststehenden Bauteils des Antriebssystems verspannbar. Das zweite Reibschlusssystem koppelt ein Antriebselement mit einem Abtriebselement. Dabei sind das Antriebselement, vorzugsweise über ein Getriebe, mit dem Elektromotor und das Abtriebselement mit dem Verschließteil gekoppelt. Das zweite Reibschlusselement ist gegen eine korrespondierende Berührungs- bzw. Reibfläche eines Übertragungselementes verspannbar. Dieses Übertragungselement ist wiederum mit dem ersten Reibschlusselement gekoppelt.

Die mit dem ersten Reibschlusselement zusammenwirkende Berührungsfläche ist geeigneterweise die Innenfläche eines zylindrischen Gehäuses, das seinerseits ortsfest gehalten ist. Analog ist auch die mit dem zweiten Reibschlusselement zusammenwirkende Berührungsfläche die Innenoberfläche eines zylindrischen Bauteils, das innerhalb des feststehenden Gehäuses drehbeweglich angeordnet ist. Dieses Bauteil trägt zur Erfüllung der Funktion als Übertragungselement außenseitig klauenartige Funktionselemente, die an den Enden des ersten Reibschusselementes angreifen. Bei dem als Schlingfeder ausgeführten ersten Reibschlusselement wirken diese Funktionselemente mit einander beabstandet gegenüberstehenden und nach innen abgewinkelten Federenden der Schlingfeder vorzugsweise außenseitig zusammen und nehmen diese somit quasi zwischen sich beabstandet mit einem gewissen Spiel oder Spalt auf.

Die Bauteile der Kupplungsvorrichtung sind geeigneterweise konzentrisch angeordnet. Dabei sind zweckmäßigerweise das Abtriebselement vom Antriebselement und dieses vom zweiten Reibschlusselement umgeben. Das Übertragungselement ist zwischen den beiden Reibschlusselementen angeordnet, wobei das erste Reibschlusselement vom feststehenden Bauteil umgeben ist. Dieses, geeigneterweise hülsenartig Bauteil stellt mit dessen zylindrischer Innenwandung die mit dem ersten Reibschlusselement zusammenwirkende Berührungsfläche zur Verfügung. Das ebenfalls hohlzylindrische Übertragungselement bildet mit dessen Innenwandung die mit dem zweiten Reibschlusselement zusammenwirkende Berührungsfläch. Außenwandseitig angeformte und zueinander beabstandete klauenartige Vorsprünge mit einander zugewandten Anschlägen greifen an gegenüberliegenden Seiten der Federenden des ersten Reibschlusselementes an.

Das Abtriebselement und das Antriebselement umfassen zylindrische, ineinander geführte Schäfte, die nach Art einer Nut-Feder-Verbindung wirksame Fügeelemente aufweisen. In dieser Koppelverbindung liegen die Federende des zweiten Reibschlusselementes mit definiertem Spiel ein, wobei geeigneterweise Anschläge des Abtriebslement und des Antriebselement an gegenüberliegenden Seiten der Federenden des zweiten Reibschlusselementes angreifen.

Die Kupplungsvorrichtung weist eine definierte Reibung auf, die einerseits auf die Gewichtskraft des Verschließsystems ausgelegt und andererseits überwindbar ist. Dies betrifft insbesondere die Reibung zwischen dem ersten Reibschlusselement und dem feststehenden Gehäuse. Die Reibung zwischen dem zweiten Reibschlusselement und dem Übertragungselement ist bei elektromotorischem Antrieb und somit antriebsseitigem Drehmoment vergleichsweise klein, während diese Reibung bei manueller Betätigung oder Betriebsstop, d.h. bei in beliebiger Position entlang des Verstellweges verharrendem Verschließteil vergleichsweise groß ist.

Bei manueller Betätigung des Verschließteils erfolgt daher infolge eines Lösens des ersten Reibschlusselementes und unter Überwindung der Haftreibung ein Übergang in die vergleichsweise geringe Gleitreibung zwischen dem feststehenden Bauteil und dem ersten Reibschlusselement, so dass dieses zusammen mit den hiermit gekoppelten Elementen, nämlich dem Abtriebs-, Antriebs- und Übertragungselement einschließlich des zweiten Reibschlusselementes an der zugeordneten Berührungsfläche des feststehenden Bauteils entlang gleiten und gegenüber diesem somit quasi durchrutscht.

Während bei einem abtriebsseitig wirksamen Drehmoment das zweite Reibschlusselement gegen die zugeordnete Berührungsfläche des Übertragungselementes verspannt ist und die Blockierung des ersten Reibschlusselement gelöst wird, wird bei elektromotorischem Antrieb das antriebsseitig erzeugte Drehmoment vom Antriebselement auf das Abtriebselement über das zweite Reibschlusselement übertragen, indem dessen Blockierung gelöst wird. Hierbei stützt sich das Übertragungselement über das dann blockierte erste Reibschlusselement am feststehenden Bauteil ab.

Da die Reibung zwischen dem feststehenden Bauteil und dem ersten Reibschlusselement bei einer manuellen Betätigung kleiner ist als zwischen dem zweiten Reibschlusselement und dem Übertragungselement ist sichergestellt, dass ein infolge einer manuellen Betätigung abtriebsseitig wirksames Drehmoment vom Abtriebselement über das dann in Blockierrichtung verspannte zweite Reibschlusselement auf das Übertragungselement und von diesem auf das erste Reibschlusselement übertragen wird, um dieses von der zugeordneten Berührungsfläche des feststehenden Bauteiles zu lösen. Hierzu greift das Abtriebselement drehrichtungsabhängig an dem entsprechenden Federende des zweiten Reibschlusselementes in Blockierrichtung an, während das Übertragungselement an dem jeweiligen Federende des ersten Reibschlusselementes in Löserichtung angreift. Demgegenüber wird bei antriebsseitig erzeugtem Drehmoment das innenliegende zweite Reibschlusselement drehrichtungsabhängig durch entsprechende Einwirkung auf dessen Federende mittels des Antriebselementes in Löserichtung betätigt, so dass nach Überwindung der Haftreibung zwischen dem zweiten Reibschlusselement und dem Übertragungselement ein Übergang in die Gleitreibung erfolgt und das antriebsseitige Drehmoment unter Wirkung lediglich der vergleichsweise geringen Gleitreibung auf das Abtriebselement übertragen wird.

In besonders zweckmäßiger Ausgestaltung ist ein zwischen den Enden bzw. Federenden des ersten Reibschlusselementes Federelement angeordnet. Mittels dieses, zweckmäßigerweise als Druckfeder wirksamen Federelementes wird das erste Reibschlusselementes gegen die zugeordnete Berührungsfläche zusätzlich verspannt. Da die Federkraft bzw. Federkonstante des Federelementes in weiten Bereichen wählbar ist, kann in vorteilhafter Weise die Kupplungsvorrichtung bei ansonsten gleichen Bauteilen für unterschiedliche Verschließteile mit verschiedenen Gewichtskräften eingesetzt werdender, indem lediglich Federelemente mit unterschiedlichen Federkonstanten bereitgestellt und bedarfsweise eingesetzt werden müssen.

Bevorzugt sind sowohl das erste Reibschlusselement als auch das zweite Reibschlusselement als eine Schlingfeder mit einer Anzahl von Windungen ausgebildet, deren Federenden zueinander beabstandet und zweckmäßigerweise nach innen abgewinkelten sind.

Das Antriebssystem weist in zweckmäßiger Ausgestaltung zwei teleskopartig ineinander greifende Gehäusehülsen zur Aufnahme des Elektromotors, des Getriebes, der Kupplungsvorrichtung, einer Spindel mit Spindelmutter zur relativen Längsverstellung der beiden Gehäusehülsen sowie einer Anzahl von in Reihe und/oder parallel geschalteten und in Gehäuselängsrichtung wirksamen Federn auf. Dabei ist die Kupplungsvorrichtung vorteilhaftenrveise dem mit dem Elektromotor gekoppelten Getriebe nachgeschaltet. Für eine antriebsseitigen Motor- bzw. Getriebeanbindung sind an das Antriebselement klauenartige Koppel- oder Kuppelelemente angeformt. Analog weist das Abtriebselement entsprechende Kuppelelemente für eine abtriebsseitige Spindelanbindung auf.

Vorzugsweise ist ein sich aus der Reibung (den Reibungsverhältnissen) der Kupplungsvorrichtung und der Federkraft (Federkonstante) der oder jeder Feder zusammensetzender Kraftverlauf (reibungs- und federkraftbedingter Kraftverlauf) derart eingestellt, ausgelegt oder abgestimmt, dass die wirksame Rückstellkraft des Verschließteils entlang des Verstellweges positionsunabhängig, d. h. auch unabhängig von der Neigung des Kraftfahrzeugs an einer Steigung oder einem Gefälle kompensiert ist. Bei automatischer Betätigung des Verschließteils und einem hierdurch bedingten, sich in Abhängigkeit vom Öffnungswinkel ändernden Kraftverlauf überschreitet der reibungs- und federkraftbedingte Kraftverlauf den eine Öffnungsbewegung des Verschließteils repräsentierender Motorkraftverlauf und unterschreitet den eine Schließbewegung repräsentierenden Motorkraftverlauf. Insbesondere bei einem heckdeckelartigen Verschließteil steigt erkanntermaßen die Kraft (Rückstellkraftverlauf) als Funktion des Öffnungswinkels des Verschließteils bis zu einem Sättigungsbereich an, während bei einem heckklappenartigen Verschließteil die Kraft zunächst bis zu einem Maximum ansteigend und anschließend abnimmt.

Die mit der Erfindung erzielten Vorteile bestehen insbesondere darin, dass das Antriebssystem auf Grund dessen definierter Reibung (Reibungsverhältnisse) innerhalb der Kupplungsvorrichtung ein zuverlässiges Halten des Verschließteils gegen eine unerwünschte Schließbewegung und/oder eine selbstständige Öffnungsbewegung bei gleichzeitig besonders hohem Wirkungsgrad im Automatikbetrieb des Verschließteils, insbesondere in dessen Öffnungsposition, erreicht ist. Zudem sind bei einer manuellen Betätigung des Verschließteils, insbesondere bei ausgeschaltetem elektromotorischem Antrieb, nur geringe manuelle Verstellkräfte aufzuwendenden.

Die Dynamik der Kupplungsvorrichtung bzw. des Antriebssystems ist besonders groß. So sind einerseits bei einer elektromotorischen Betätigung des Verschließteils die Reibungsverluste innerhalb der Kupplungsvorrichtung besonders gering. Andererseits ist bei ausgeschalteten elektromotorischen Antrieb die von der Kupplungsvorrichtung erzeugte Haltekraft entlang des gesamten Verstellweges des Verschließteils auch bei sehr großen Verschließteilgewichten sowohl ausreichend als auch derart definiert bemessen, dass eine zur manuellen Betätigung des Verschließteils notwendige Verstellkraft eine besonders komfortable Handhabung gewährleistet. Auf Grund dieses Dynamikbereiches der Kupplungsvorrichtung in Folge der definierten Reibung können bei gleichzeitig besonders kompakter Bauweise Verschließteilgewichte, insbesondere Heckklappengewichte, von bis zu 80kg auch bei einer Neigung des an einer Steigung oder an einem Gefälle positionierten Kraftfahrzeugs von bis zu 40° zuverlässig beherrscht werden. Der Dynamikbereich liegt dabei zwischen kleiner 0,1 Nm beim elektromotorischen Betrieb bis zu 2Nm, insbesondere 0,5Nm bis 1,5Nm, im Ruhezustand bei im dynamischen Gleichgewicht befindlichem Verschließteil und abgeschaltetem Automatikbetrieb.

Auf Grund dieser besonders vorteilhaften Dynamik- und Reibungsverhältnisse der Kupplungsvorrichtung kann die Motorleistung des Elektromotors und/oder die Federkraft bzw. Federkonstante der zusätzlichen Federn entsprechend gering bemessen werden. So ist bereits eine einzelne zusätzliche Feder ausreichend, obwohl insbesondere bei einem in Abhängigkeit vom Öffnungswinkel des Verschließteils zunächst bis zu einer Maximum ansteigenden und von hier aus wieder abnehmenden Moment bzw. einer entsprechenden Rückstellkraft des Verschließteils entlang des Verstellweges eine Reihen- und/oder Parallelschaltung mehrerer Federn eine vergleichsweise gute Annäherung an den vom Verstellweg- oder Öffnungswinkel abhängigen Momentenverlauf ermöglicht.

Da jedoch auch bei Einsatz mehrerer Federn deren kommulierte Federkraft entlang des Verstellweges des Verschließteils stets vom tatsächlichen Momenten- oder Kräfteverlauf der Rückstellkraft des Verschließteils zumindest stellenweise abweicht und hierbei von der Rückstellkraft des Verschließteils über- oder unterschritten wird, können diese Federkräfte den tatsächlichen Kraftverlauf über den gesamten Verstellweg- bzw. Öffnungswinkelbereich nur unvollständig abbilden. In Verbindung mit der Kupplungsvorrichtung des erfindungsgemäßen Antriebssystems kann demgegenüber der gesamte Kräfteverlauf zuverlässig für alle Betriebssituationen bei automatischem Antrieb drehrichtungsunabhängig sowie bei Betriebsstopp und manueller Betätigung über den gesamten Winkelbereich des Verschließteils zuverlässig, d. h. praktisch ohne Über- bzw. Unterschreitung abgedeckt werden. Die dabei von den Federelementen nicht abgedeckten Bereiche dieses Kräfteverlaufes werden dann von der Reibung der Kupplungsvorrichtung des Antriebssystems übernommen.

Nachfolgend werden Ausführungsbeispiele der Erfindung anhand einer Zeichnung näher erläutert. Darin zeigen:
- Fig. 1: in einem teilweisen Längsschnitt eine Ausführungsform eines erfindungsgemäßen Antriebssystems für ein Verschließteil eines Kraftfahrzeugs,
- Fig. 2: einem vergrößerten Ausschnitt des Antriebssystems gemäß Fig. 1 im Bereich einer Kupplungsvorrichtung,
- Fig. 3: die Kupplungsvorrichtung schematisch in einem Querschnitt,
- Fig. 4: die Kupplungsvorrichtung in einer Explosionsdarstellung,
- Fig. 5: in einem Kraft-/Winkeldiagramm mehrere Kräfteverläufe des Antriebssystems bei betätigem Verschließteil in Form einer Heckklappe, und
- Fig. 6: in perspektivischer Ansicht eine mittels zwei Antriebssystemen automatisch betätigbare Heckklappe eines Kraftfahrzeugs in geöffneter Position.

Einander entsprechende Teile sind in allen Figuren mit den gleichen Bezugszeichen versehen.

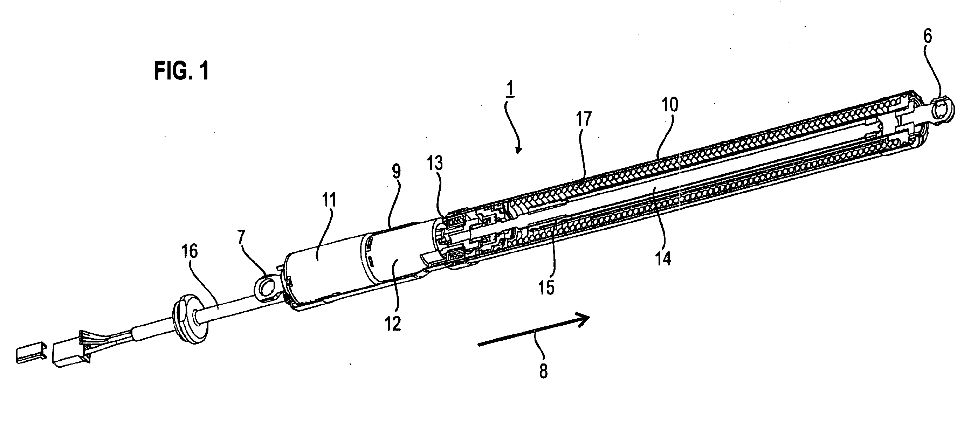

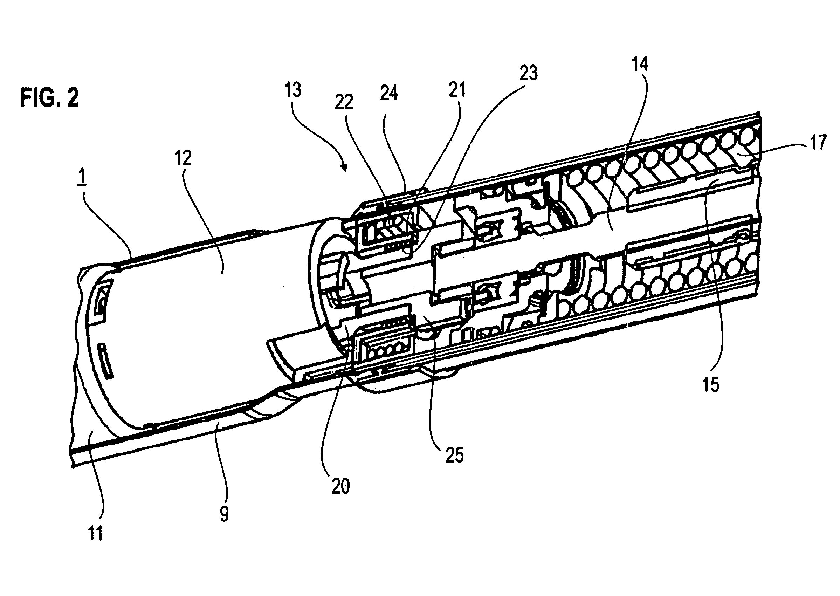

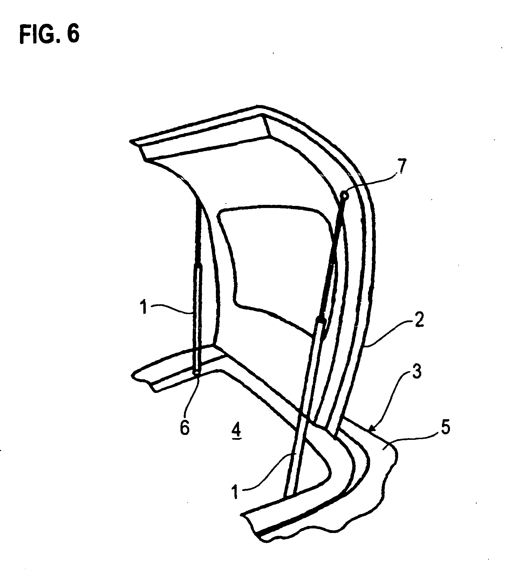

Das in den Fig. 1 und 2 dargestellte Antriebssystem 1 dient zur automatischen Betätigung eines Verschließteils in Form beispielsweise einer Heckklappe 2 eines in Fig. 6 in dreidimensionaler Teilansicht gezeigten Kraftfahrzeugs 3. In der Darstellung sind zwei derartige Antriebssystems 1 gezeigt, die gemeinsam eine Verstellung der Heckklappe 2 zwischen einer geschlossenen Position (Schließposition) und einer geöffneten Position (Öffnungsposition) bewirken. Anstelle der dargestellten Heckklappe 2 kann das Antriebssystem 1 auch zur Verstellung eines Kofferraumdeckels, einer Schiebe- oder Schwenktür, einer Motorhaube oder anderer Verstellelemente eines Kraftfahrzeuges 3 vorgesehen sein, um eine Öffnung 4 einer Kraftfahrzeugkarosserie 5 zu verschließen. Das Antriebssystem 1 weist beidendseitig beispielsweise kugelpfannen- oder ösenartige Lagerungs- und Befestigungselemente 6,7 auf, mittels denen das Antriebssystem 1 an der Fahrzeugkaroserie 6 bzw. an dem Verschließteil 2 schwenkbeweglich befestigt ist.

Das Antriebssystem 1 umfasst zwei beispielsweise teleskopartig ineinander verschiebbare und somit in Längsrichtung 8 gegeneinander verstellbare Gehäusehülsen 9,10 zur Aufnahme eines Elektromotors 11, eines diesem nachgeschaltetem Getriebes 12, beispielsweise in Form eines zweistufigen Planetengetriebes, einer mit dem Getriebe 12 gekoppelten Kupplungsvorrichtung 13 und eines mit dieser wiederum gekoppelten Spindelantriebs mit einer zentralen, insbesondere mehrgängigen Spindel 14 und einer auf dieser drehend gelagerten Spindelmutter 15. Über ein Versorgungs- und Steuerkabel 16, das aus dem Gehäuse 9,10 des Antriebssystems 1 herausgeführt ist, ist der Elektromotor 11 in beiden Drehrichtungen bestrom- bzw. ansteuerbar. Wird der Elektromotor 11 gesteuert bestromt, so wird das von diesem erzeugte Drehmoment über das Getriebe 12 übersetzt und das dadurch erhöhte Drehmoment über die Kupplungsvorrichtung 13 an die Spindel 14 abgegeben, so dass sich diese in Abhängigkeit von der Bestromungsrichtung des Elektromotors 11 in der einen oder anderen Drehrichtung dreht. In Folge der Drehung der Spindel 14 wird die Spindelmutter 15 in Längsrichtung 8 axial verstellt. Dabei ist die Spindelmutter 15 mit der dieser zugeordneten Gehäusehülse 9,10 derart wirkverbunden, dass dieses gleichsinnig mit der Spindelmutter 15 verstellt wird. In Folge dieser Verstellung wird das mit dem Antriebssystem 1 gekoppelte Verschließteil 2 in Abhängigkeit von der Drehrichtung in die Öffnungsposition oder in die Schließposition automatisch verstellt.

Diese Verstellung wird kräftemäßig überlagert durch im Ausführungsbeispiel eine einzelne Feder 17, die die Spindel 14 koaxial umgibt und in Längsrichtung 8 wirkt, um das Öffnen des Verschließteils 2 gegen dessen Gewichtskraft zu unterstützen. Auch können mehrere Federn 17 in Reihen- und/oder Parallelschaltung vorgesehen sein, wie dies in den eingangs genannten deutschen Gebrauchsmustem DE 20 2005 003 466 U1 und DE 20 2005 007 155 U1 gezeigt und beschrieben ist.

Wie aus den Figuren 2 bis 4 vergleichsweise deutlich ersichtlich ist, umfasst die Kupplungsvorrichtung 13 ein Antriebselement 20, ein Übertragungselement 21, ein erstes Reibschlusselement in Form einer Schlingfeder 22, ein zweites Reibschlusselement in Form einer Schlingfeder 23, ein im Montagezustand feststehendes, nachfolgend als Gehäuseteil bezeichnetes Bauteil 24 und ein Abtriebselement 25.

Das zweckmäßigerweise zentrale Abtriebselement 25 ist im Montagezustand der Kupplungsvorrichtung 13 vom Antriebselement 20 umgeben. Hierzu weisen das Abtriebselement 25 einen zylindrischen Schaft 26 und das Antriebselement einen zylindrischen Schaft 27 auf. Das Antriebselement 20 bzw. dessen Schaft 27 wiederum ist umgeben von der zweiten Schlingfeder 23, die ihrerseits umgeben ist von dem Übertragungselement 21. Dieses wiederum ist umgeben von der ersten Schlingfeder 22, die ihrerseits umgeben ist von dem Gehäuseteil 24.

Für eine reibschlüssige Verbindung zwischen dem feststehenden Gehäuseteil 24 und der ersten, außen liegenden Schlingfeder 22 stellt die zylinderförmige Innenwand des feststehenden Gehäuseteils 24 die korrespondierende Reib- oder Berührungsfläche 28 dar. Analog stellt die ebenfalls vorzugsweise zylinderförmige Innenwandung des im Wesentlichen hohlzylindrisch ausgebildeten Übertragungselementes 21 die korrespondierende Reib- bzw. Berührungsfläche 29 für die zweite; innenliegende Schlingfeder 23 dar. Außenwandseitig ist das Übertragungselement mit zumindest zwei klauenartigen Vorsprüngen 30a und 30b versehen, die zweckmäßigerweise zueinander beabstandet und am Umfang des Übertragungselementes 21 an dieses angeformt sind. Diese Klauen oder Vorsprünge 30a,30b bilden zueinander beabstandete und einander gegenüberliegende Anschläge 31a bzw. 31b, die an korrespondierenden Federenden 22a bzw. 22b der ersten Schlingfeder 22 in Anlage gebracht werden können. Die Federenden 22a,22b der Schlingfeder 22 sind wiederum zueinander beabstandet und nach innen zur zentralen Mittelachse 32 der Kupplungsvorrichtung 13 hin gerichtet abgewinkelt. Analog weist die zweite Schlingfeder 23 zueinander beabstandete und ebenfalls nach innen abgewinkelte Federenden 23a und 23b auf. An diese greift außenseitig das Antriebselement 20 mit dessen Schaft 27 und dort mit an einer Ausnehmung 33 gebildeten Anschlägen 34a bzw. 34b an.

Das Abtriebselement 25 bzw. dessen Schaft 26 trägt umfangsseitig einen angeformten noppen- oder klauenartigen Vorsprung 35, der Anschläge 35a und 35b bildet. Der Vorsprung 35 ragt in die Ausnehmung 33 des Antriebselementes 20 nach Art einer Nut-Feder-Verbindung ein. Ein zwischen den beiden einander gegenüberliegenden Anschlägen 34a,34b des Antriebselementes 20 und dem Vorsprung 35 bzw. dessen Anschlägen 35a,35b gebildeter Abstand oder Spalt ist derart bemessen, dass die Federenden 23aund 23b beidseitig des Vorsprungs 35 sowie zwischen diesem und den Anschlägen 34a bzw. 34b in die Ausnehmung 33 mit einem gewissen Spiel hineinragen. Das Spiel bzw. der Abstand zwischen den Federenden 23a,23b und dem Vorsprung 35 sowie den Anschlägen 34a bzw. 34b des Antriebselementes 20 ist dabei derart bemessen, dass bei einer Drehbewegung des Abtriebselementes 25 in oder entgegen dem Uhrzeigersinn stets der Vorsprung 25 das jeweilige Federende 23a,23b erreicht, bevor dieses den gegenüberliegenden Anschlag 34a bzw. 34b des Antriebselementes berührt.

Entscheidend bei dieser Bemessung oder Auslegung ist, dass das in Folge eines abtriebsseitigen Drehmomentes betätigte Abtriebselement 25 mit dessen Vorsprung 35 die zweite Schlingfeder 23 in Blockkierrichtung gegen das Übertragungselement 21 wirksam verspannt, ohne dass hierbei in der entsprechenden Drehrichtung das Antriebselement 20 ebenfalls betätigt wird und am gegenüberliegenden Federende 23b bzw. 23a angreift und ein Lösen der Schlingfeder 23 bewirkt. Analog sind die Abstands- bzw. Spaltverhältnisse zwischen den Schlingfederenden 22a,22b der ersten Schlingfeder 22 und den Klauen 30a bzw. 30b des Übertragungselementes 21 geeignet dimensioniert.

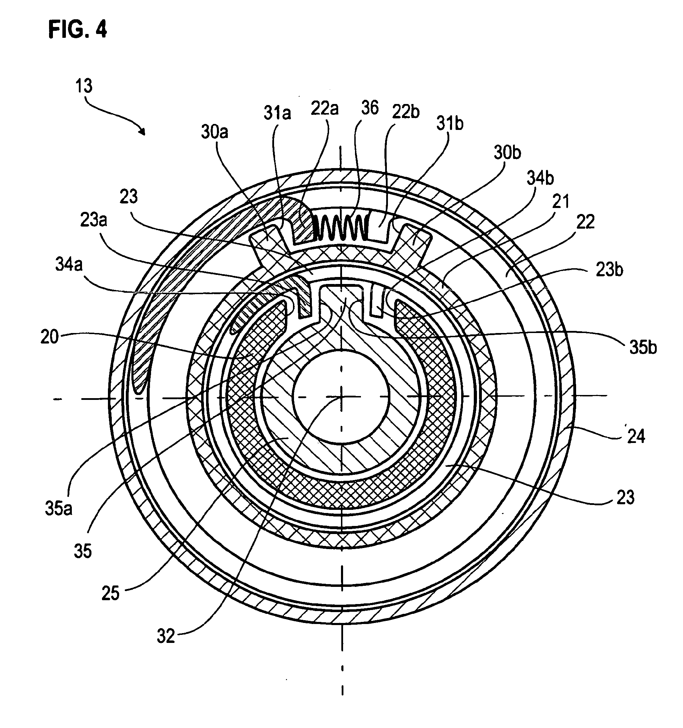

Wie aus Fig. 4 ersichtlich ist, ist zwischen den Federenden 22a und 22b der ersten Schlingfeder 22 ein vorzugsweise als Druckfeder ausgeführtes Federelement 36 angeordnet. Dieses Federelement 36 ist gegen entsprechende Federelemente mit unterschiedlichen Federkräften oder Federkonstanten austauschbar. Hierdurch ist bei ansonsten gleichen Bauteilen der Kupplungsvorrichtung 13 eine Vor- oder Verspannkraft der ersten Schlingfeder 22 gegen das feststehende Gehäuseteil 24 einstellbar. Dies wiederum ermöglicht auf besonders einfache Art und Weise eine Anpassung der Kupplungsvorrichtung 13 an unterschiedliche Gewichtskräfte des zu betätigenden Verschließteils 2.

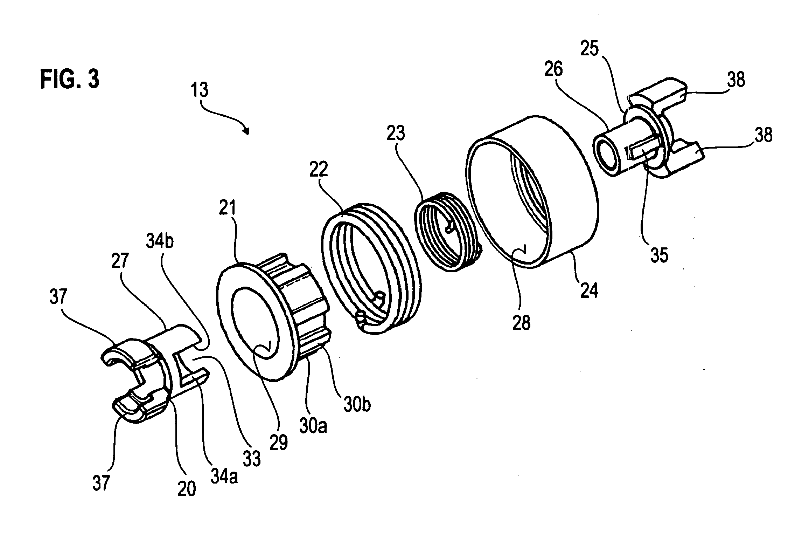

Wie Fig. 3 vergleichsweise deutlich zeigt, sind an das Antriebselement 20 für dessen antriebsseitige Anbindung an das (oder der Kupplung mit dem) Getriebe 12 klauenartige Koppelelemente 37 angeformt. Analog weist das Abtriebselement 25 entsprechende Koppelelemente 38 für eine abtriebsseitige Anbindung an die (bzw. der Kupplung mit der) Spindel 14 auf.

Bei elektromotorischem und somit automatischem Betrieb des Antriebssystems 1 wird das erzeugte und gegebenenfalls über das Getriebe 12 übersetzte Drehmoment vom Antriebselement 20 auf das Abtriebselement 25 übertragen. Dabei sind das Antriebselement 20 und das Abtriebselement 25 über die zweite Schlingfeder 23 gekoppelt. Indem diese drehrichtungsunabhängig vom Antriebselement 20 in Löserichtung betätigt wird, erfolgt nach Überwindung der Haftreibung ein Übergang in die Gleitreibung relativ zum Übertragungselement 21. Beim elektromotorischen Antrieb ist die Reibung zwischen der innenliegenden zweiten Schlingfeder 23 und dem Übertragungselement 21 vergleichsweise gering, während die Reibung zwischen der außenliegenden ersten Schlingfeder 22 und dem feststehenden Gehäuseteil 24 vergleichsweise groß ist. Demzufolge stützt sich das Übertragungselement 21 bei der Übertragung des elektromotorisch erzeugten Drehmomentes vom Antriebselement 20 über die innenliegende Schlingfeder 23 an das Abtriebselement 25 an der außenliegenden Schlingfeder 22 und über diese am feststehenden Gehäuseteil 24 ab.

Auf Grund dieser definierten Reibungsverhältnisse innerhalb der Kupplungsvorrichtung 13 sind die Reibungsverluste beim Automatikbetrieb des Antriebssystems 1 mit elektromotorischem Antrieb des Verschließteils 2 besonders gering und können beispielsweise weniger als 0,1 Nm betragen. Demzufolge kann die Motorleistung des Elektromotors 12 und/oder die Federkraft der zusätzlichen Feder 17 des Antriebssystems 1 entsprechend gering dimensioniert werden.

Bei abgeschaltetem Automatikbetrieb und demnach unbestromtem Elektromotor 11 wird in Folge der definierten Reibungsverhältnisse innerhalb der Kupplungsvorrichtung 13 und der im Zusammenwirkung mit der Feder 17 vom Antriebssystem 1 erzeugten Kraft (Moment) das Verschließteil 2 in praktisch jeder beliebigen Position entlang dessen Verstellweges zwischen der Offenposition und der Schließposition gehalten. Die Haltekraft ist dabei nicht nur genügend groß, um die in Folge der Gewichtskraft des Verschließteils 2 erzeugte Rückstellkraft über den gesamten Winkelbereich des Öffnungswinkels des Verschließteils 2 zu kompensieren. Vielmehr ist diese Haltekraft darüber hinaus ausreichend, um auch bei besonders großen Gewichtskräften des Verschließteils 2 von beispielsweise 60kg bis 80kg dieses in jeder Position entlang des Verstellweges auch bei geneigtem Kraftfahrzeug an einer Steigung oder einem Gefälle bis zu einem Steigungswinkel von 30° bis 40° zuverlässig zu halten. Dennoch ist sichergestellt, dass in all diesen Betriebssituationen und -positionen des Verschließteils 2 dieses manuell in die Schließ- oder Öffnungsposition bestätigt werden kann, ohne dass eine als unerwünscht oder unangenehm angesehene manuelle Kraft aufzuwenden ist.

Zur Realisierung dieser Funktionalität sind wiederum die definierten Reibungsverhältnisse des Kupplungssystems 13 und des Abtriebssystems 1 maßgeblich. So wird bei ausgeschaltetem Elektromotor 11 ein abtriebsseitig wirksames Drehmoment vom Abtriebselement 25 über die dann in Blockierrichtung gegen das Übertragungselement verspannte zweite Schlingfeder 23 vom Übertragungselement 21 auf die äußere erste Schlingfeder 22 übertragen. Die Haftreibung zwischen dieser äußeren Schlingfeder 22 und dem feststehenden Gehäuseteil 24 ist dabei derart eingestellt bzw. bemessen, dass die Rückstellkraft des Verschließteils 2 sowohl positionsunabhängig als auch unabhängig von der Lage des Kraftfahrzeuges über die äußere Schlingfeder 22 in das feststehende Gehäuse 24 eingeleitet wird, ohne den Reibschluss zwischen der Schlingfeder 22 und dem feststehenden Gehäuseteil 24 zu lösen. Sobald dieser im Wesentlichen gewichtskraftbedingten Rückstellkraft des Verschließteils 2 eine manuelle Betätigungskraft hinzutritt, wird die äußere Schlingfeder 22 mittels des Übertragungselementes 21 drehrichtungsunabhängig in Löserichtung betätigt und somit der Reibschluss bzw. die Blockierung gelöst. Nach Überwindung der Haftreibung bei manueller Betätigung des Verschließteils 2 erfolgt ein Übergang in die vergleichsweise geringe Gleitreibung. Somit können sich die miteinander gekoppelten Elemente, d.h. das Antriebselement 25, die innerer Schlingfeder 23, das Antriebselement 20, das Übertragungselement 21 und die äußere Schlingfeder 22 gegenüber dem feststehenden Gehäuse 24 unter Aufrechterhaltung der definierten Gleitreibung in die jeweilige Drehrichtung bewegen und somit gegenüber dem Gehäuseteil 24 quasi durchrutschen. Das Antriebselement 20 ist dabei mit dem Abtriebselement 25 gekoppelt und gegenüber dem feststehenden Gehäuseteil 24 relativ beweglich, d. h. von diesem praktisch entkoppelt.

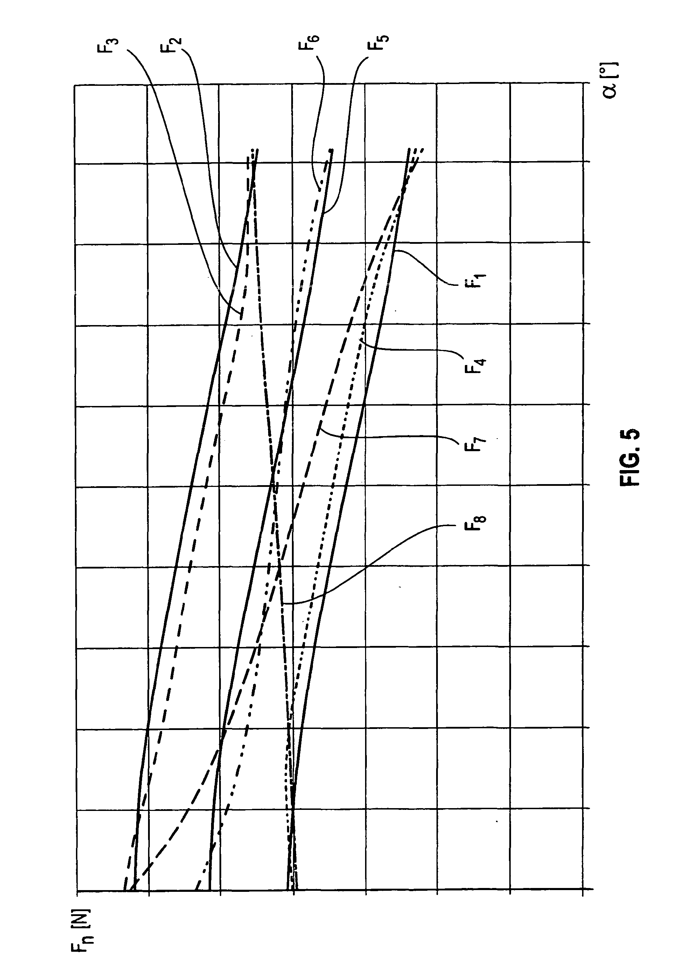

Zur Veranschaulichung der Kräfteverhältnisse zeigt Fig. 5 in einem Kraft-/Winkel-Diagramm eine Anzahl von Kraft- oder Momentverläufen Fₙ (mit n = 1 bis 8) in Abhängigkeit vom Öffnungswinkel α des Verschließteils 2. Dabei stellen die mit F₁ und F₂ bezeichneten Kraftverläufe die Gesamtfederkraft des Antriebssystems 1 zuzüglich bzw. abzüglich der schlingfeder- und somit kupplungsbedingten Systemreibung dar. Der mit F₃ bezeichnete Kraftverlauf stellt die Motorkraft inklusive der Federkraft in einer Drehrichtung dar, während der mit F₄ bezeichnete Motorkraftverlauf die entgegengesetzte Drehrichtung zeigt. Der im Wesentlichen zentrale Kraftverlauf F₅ veranschaulicht die Gesamtfederkraft ohne Reibung. Der Funktionsverlauf F₆ repräsentiert das Gewicht bzw. die Gewichtskraft des Verschließteils 2, während die Kräfteverläufe F₇ und F₈ das Verschließteilgewicht bei einem an einem Gefälle bzw. an einer Steigung befindlichen Kraftfahrzeug 1 veranschaulichen.

Ersichtlich ist, dass die beiden Verläufe F₁ und F₂ über den gesamten Bereich des Öffnungswinkels α alle übrigen Kräfteverläufe F₃ bis F₈ praktisch vollständig einschließen. Dies bedeutet, dass insbesondere die federkraftunterstützte Motorkraft F₂ des Elektromotors 11 bei einer elektromotorischen Verstellung des Verschließteils 2 in die Offenstellung praktisch entlang des gesamten Bereiches des Öffnungswinkels α den durch die Federkraft inklusive der systembedingten Reibung erzeugten Kraftverlauf F₃ zuverlässig überschreitet. Bei einer elektromotorischen Betätigung des Verschließteils 2 in die Schließposition unterschreitet der die Federkraft abzüglich der systembedingt, vorteilhafterweise besonders geringen Verlustreibung repräsentierende Kraftverlauf F₁ über zumindest annähernd den gesamten Öffnungswinkelbereich zuverlässig den Motorkraftverlauf F₄. Dies erfolgt darüber hinaus bei einer angepassten und dabei wünschenswerterweise besonders geringen Motorleistung.

In den in Fig. 5 veranschaulichten Kräfteverhältnissen spiegelt sich die besonders vorteilhafte definierte Reibung des Systems, insbesondere die Reibungsverhältnisse der Kupplungsvorrichtung 13, wieder. So sind einerseits bei elektromotorischem Antrieb des Verschließteils 2 die Reibungsverluste innerhalb der Kopplung zwischen dem Antriebselement 20 und dem Abtriebselement 25 auf Grund der geringen Gleitreibung der inneren zweiten Schlingfeder 23 und dem Übertragungselement 21 besonders gering. Andererseits ist die Reibung innerhalb der Kopplung zwischen Abtriebselement 25, Schlingfeder 23 und Übertragungselement 21 bei ausgeschaltetem Elektromotor 12 vergleichsweise groß und insbesondere größer als die Reibung (Haftreibung) des Reibschlusses zwischen der äußeren Schlingfeder 22 und dem feststehenden Gehäuseteil 24. Dennoch ist die Reibung zwischen der äußeren Schlingfeder 22 und dem feststehenden Gehäuse 24 derart ausgelegt, dass der entsprechende Kräfteverlauf F₂ entlang des gesamten Bereiches des Öffnungswins α des Verschließteils 2 nur geringfügig oberhalb des Funktionsverlaufs der Motorkraft F₃ liegt, der die Kräfteverhältnisse bei einer elektromotorischen Betätigung des Verschließteils 2 in eine Offenposition entlang des Verstellweges repräsentiert.

### Bezugszeichenliste

- 1: Antriebssystem
- 2: Heckklappe
- 3: Kraftfahrzeug
- 4: Öffnung
- 5: Kraftfahrzeugkarosserie
- 6: Befestigungselement
- 7: Befestigungselement
- 8: Längsrichtung
- 9: Gehäusehülse
- 10: Gehäusehülse
- 11: Elektromotor
- 12: Getriebe
- 13: Kupplungsvorrichtung
- 14: Spindel
- 15: Spindelmutter
- 16: Versorgungs-/Steuerkabel
- 17: Feder
- 20: Antriebselement
- 21: Übertragungselement
- 22: Schlingfeder
- 22a,b: Federende
- 23: Schlingfeder
- 23a,b: Federenden
- 24: Gehäuse-/Bauteil
- 25: Abtriebselement
- 26: Schaft
- 27: Schaft
- 28: Reib-/Berührungsfläche
- 29: Reib-/Berührungsfläche
- 30a,b: Vorsprung
- 31a,b: Anschlag
- 32: Mittelachse
- 33: Ausnehmung
- 34a,b: Anschlag
- 35: Vorsprung
- 35a,b: Anschlag
- 36: Federelement
- 37: Koppelelement
- 38: Koppelelement

## Patentansprüche

1. Antriebssystem (1) zur automatischen Betätigung eines Verschließteils (2), insbesondere einer Heckklappe oder eines Heckdeckels, eines Kraftfahrzeugs (3), mit einer antriebsseitig mit einem Elektromotor (11) des Antriebssystems (1) gekoppelten und abtriebsseitig mit dem Verschließteil (2) koppelbaren Kupplungsvorrichtung (13), wobei
- die Kupplungsvorrichtung (13) ein als Schlingfeder mit zueinander beabstandeten, insbesondere nach innen abgewinkelten, Federenden (22a, 22b) ausgebildetes erstes Reibschlusselement (22) aufweist, das gegen eine erste Berührungsfläche (28) eines feststehenden Bauteils (24) der Kupplungsvorrichtung verspannbar ist,
- die Kupplungsvorrichtung (13) ein als Schlingfeder mit zueinander beabstandeten, insbesondere nach innen abgewinkelten, Federenden (23a, 23b) ausgebildetes zweites Reibschlusselement (23) aufweist, das ein Antriebselement (20) der Kupplungsvorrichtung mit einem Abtriebselement (25) der Kupplungsvorrichtung koppelt,
- die Kupplungsvorrichtung (13) ein mit dem ersten Reibschlusselement (22) gekoppeltes hohlzylindrisches Übertragungselement (21) aufweist, dessen Innenwandung eine mit dem zweiten Reibschlusselement (23) zu dessen Verspannung zusammenwirkende zweite Berührungsfläche (29) bildet, und dessen Außenwandung zueinander beabstandete klauenartige Vorsprünge (30a,30b) mit einander zugewandten Anschlägen (31 a,31 b) trägt, die an gegenüberliegenden Seiten der Federenden (22a,22b) des ersten Reibschlusselementes (22) angreifen,
- wobei bei elektromotorischem Antrieb das zweite Reibschlusselement (23) das antriebsseitig erzeugte Drehmoment vom Antriebselement (20) auf das Abtriebselement (25) überträgt, und
- wobei bei manueller Betätigung des Verschließteils (2) das Übertragungselement (21) das abtriebsseitig erzeugte Drehmoment auf das erste Reibungselement (22) überträgt und dessen Blockierung gegenüber der zugeordneten ersten Berührungsfläche (28) löst.

2. Antriebssystem (1) nach Anspruch 1,
**gekennzeichnet durch**
ein zwischen den Federenden (22a,22b) des ersten Reibschlusselementes (22) eingespanntes, insbesondere als Druckfeder wirksames, vorzugsweise austauschbares, Federelement (36).

3. Antriebssystem (1) nach Anspruch 1 oder 2,
**gekennzeichnet durch**
ein hülsenartiges feststehendes Bauteil (24), dessen zylindrische Innenwandung die mit dem ersten Reibschlusselement (22) zusammenwirkende erste Berührungsfläche (28) bildet.

4. Antriebssystem (1) nach einem der Ansprüche 1 bis 3,
**dadurch gekennzeichnet,**
**dass** das Abtriebselement (25) erste Anschläge (35a,35b) und das Antriebselement (20) zweite Anschläge (34a,34b) aufweist, wobei die Anschläge (34a,34b;35a,35b) an gegenüberliegenden Seiten von Federenden (23a,23b) des zweiten Reibschlusselementes (23) angreifen.

5. Antriebssystem (1) nach einem der Ansprüche 1 bis 4,
**dadurch gekennzeichnet,**
**dass** das Antriebselement (20) und das Abtriebselement (25) jeweils einen zylindrischen Schaft (27,26) aufweisen, wobei die Schäfte (27,26) ineinander geführt und mit nach Art einer Nut-Feder-Verbindung wirksamen Fügeelementen (33,35) miteinander gekoppelt sind.

6. Antriebssystem (1) nach Anspruch 5,
**dadurch gekennzeichnet,**
**dass** das zweite Reibschlusselement (23) mit dessen Federenden (23a,23b) innerhalb der Nut-Feder-Verbindung zwischen den Fügeelementen (33,35) des Abtriebselements (25) und des Antriebselement (20) einliegt.

7. Antriebssystem (1) nach einem der Ansprüche 1 bis 6,
**dadurch gekennzeichnet,**
**dass** das Antriebselement (20) und/oder das Abtriebselement (25) klauenartige Koppelelemente (37,38) für eine antriebsseitigen Motor oder Getriebeanbindung bzw. für eine abtriebsseitige Spindelanbindung aufweisen.

8. Antriebssystem (1) nach einem der Ansprüche 1 bis 7,
**gekennzeichnet durch**
zwei teleskopartig ineinander greifende Gehäusehülsen (9,10) zur Aufnahme des Elektromotors (11), gegebenenfalls des Getriebes (12), der Kupplungsvorrichtung (13), Mittel (14,15) zur relativen Längsverstellung der beiden Gehäusehülsen (9,10), insbesondere eine Spindel (14) mit Spindelmutter (15), sowie einer Anzahl von in Reihe und/oder parallel geschalteten und in Gehäuselängsrichtung (8) wirksamen Federn (17).

9. Antriebssystem (1) nach einem der Ansprüche 1 bis 8,
**dadurch gekennzeichnet,**
**dass** die Kupplungsvorrichtung (13) dem mit dem Elektromotor (11) gekoppelten Getriebe (12) nachgeschaltet ist.

10. Antriebssystem (1) nach Anspruch 8 oder 9,
**dadurch gekennzeichnet,**
**dass** ein sich aus die Reibung der Kupplungsvorrichtung (13) und der Federkraft der oder jeder Feder (17) zusammensetzender Kraftverlauf (F₁,F₂) derart bemessen ist, dass die wirksame Rückstellkraft des Verschließteils (2) entlang des Öffnungswinkel (α) positionsunabhängig kompensiert ist und bei automatischer Betätigung des Verschließteils (2) an einen sich in Abhängigkeit vom Öffnungswinkel (α) ändernden und eine Öffnungsbewegung des Verschließteils (2) repräsentierenden Motorkraftverlauf (F₃) überschreitet bzw. eine Schließbewegung repräsentierenden Motorkraftverlauf (F₄) unterschreitet.

## Claims

1. Drive system (1) for the automatic actuation of a closing part (2), in particular a tailgate or a boot lid, of a motor vehicle (3), comprising a coupling device (13) which is coupled on the drive side to an electric motor (11) of the drive system (1) and which can be coupled on the output side to the closing part (2), wherein
- the coupling device (13) has a first friction-tight element (22) which is formed as a wrap spring having mutually spaced, in particular inwardly angled spring ends (22a, 22b) and which can be tensioned against a first contact surface (28) of a stationary component (24) of the coupling device,
- the coupling device (13) has a second friction-tight element (23) which is formed as a wrap spring having mutually spaced, in particular inwardly angled spring ends (23a, 23b) and which couples a drive element (20) of the coupling device to a driven element (25) of the coupling device,
- the coupling device (13) has a hollow cylindrical transfer element (21) which is coupled to the first friction-tight element (22) and of which the inner wall forms a second contact surface (29) cooperating with the second friction-tight element (23) for the tensioning thereof, and of which the outer wall carries mutually spaced claw-like protrusions (30a, 30b) having mutually opposed stops (31a, 31b) which engage with opposite sides of the spring ends (22a, 22b) of the first friction-tight element (22),
- when driven by the electric motor, the second friction-tight element (23) transfers the torque created on the drive side from the drive element (20) to the driven element (25), and
- during manual operation of the closure part (2) the transfer element (21) transfers the torque created on the driven side to the first friction-tight element (22) and releases the locking thereof with respect to the associated first contact surface (28).

2. Drive system (1) according to claim 1, **characterised by** a preferably replaceable spring element (36) fixed between the spring ends (22a, 22b) of the first friction-tight element (22) and in particular effective as a compression spring.

3. Drive system (1) according to either claim 1 or claim 2, **characterised by** a sleeve-like fixed component (24), of which the cylindrical inner wall forms the first contact surface (28) cooperating with the first friction-tight element (22).

4. Drive system (1) according to any one of claims 1 to 3, **characterised in that** the driven element (25) comprises first stops (35a, 35b) and the drive element (20) comprises second stops (34a, 34b), the stops (34a, 34b; 35a, 35b) engaging with opposite sides of spring ends (23a, 23b) of the second friction-tight element (23).

5. Drive system (1) according to any one of claims 1 to 4, **characterised in that** that drive element (20) and the driven element (25) each have a cylindrical shaft (27, 26), the shafts (27, 26) being guided one inside the other and being coupled to one another by joining elements (33, 35) which act in the manner of a tongue-and-groove connection.

6. Drive system (1) according to claim 5, **characterised in that** the spring ends (23a, 23b) of the second friction-tight element (23) lie inside the tongue-and-graave connection between the joining elements (33, 35) of the driven element (25) and of the drive element (20).

7. Drive system (1) according to any one of claims 1 to 6, **characterised in that** the drive element (20) and/or the driven element (25) comprises claw-like coupling elements (37, 38) for a motor or gear connection on the drive side or for a spindle connection on the output side.

8. Drive system (1) according to any one of claims 1 to 7, **characterised by** two housing halves (9, 10), engaging telescopically in one another, for receiving the electric motor (11), possibly the gear unit (12) of the coupling device (13), means (14, 15) for the relative longitudinal adjustment of the two housing halves (9, 10), in particular a spindle (14) having a spindle nut (15), and a number of springs (17) arranged in series and/or in parallel and effective in the longitudinal direction of the housing (8).

9. Drive system (1) according to any one of claims 1 to 8, **characterised in that** the coupling device (13) is arranged downstream of the gear unit (12) coupled to the electric motor (11).

10. Drive system (1) according to either claim 8 or claim 9, **characterised in that** a power curve (F₁, F₂) formed of the friction of the coupling device (13) and the resilience of the or each spring (17) is such that the effective restoring force of the closing part (2) is compensated along the opening angle (α), independently of position, and with automatic operation of the closing part (2) exceeds a motor power curve (F₃) fluctuating according to the opening angle (α) and representing an opening movement of the closing part (2), or falls below a motor power curve (F₄) representing a closing movement.

## Revendications

1. Système d'entraînement (1) pour l'actionnement automatique d'un composant de fermeture (2), notamment d'un hayon arrière ou d'un capot arrière d'un véhicule automobile (3), comprenant un dispositif d'accouplement (13) couplé, côté entraînement, avec un moteur électrique (11) du système d'entraînement (1), et pouvant être couplé, côté sortie d'entraînement, au composant de fermeture (2), système dans lequel
- le dispositif d'accouplement (13) comprend un premier élément de liaison par friction (22) réalisé sous forme de ressort enroulé avec des extrémités de ressort (22a, 22b) espacées l'une de l'autre et notamment coudées vers l'intérieur, ce premier élément de liaison par friction pouvant être serré contre une première surface de contact (28) d'une pièce (24) fixe du dispositif d'accouplement,
- le dispositif d'accouplement (13) comprend un deuxième élément de liaison par friction (23) réalisé sous forme de ressort enroulé avec des extrémités de ressort (23a, 23b) espacées l'une de l'autre et notamment coudées vers l'intérieur, ce deuxième élément de liaison par friction réalisant le couplage d'un élément d'entraînement (20) du dispositif d'accouplement avec un élément de sortie d'entraînement (25) du dispositif d'accouplement,
- le dispositif d'accouplement (13) comprend un élément de transmission (21) cylindrique creux, couplé avec le premier élément de liaison par friction (22), dont la paroi intérieure forme une deuxième surface de contact (29) coopérant avec le deuxième élément de liaison par friction (23) en vue de son serrage, et dont la paroi extérieure porte deux protubérances (30a, 30b) à la manière de crabots, espacées l'une de l'autre et comprenant deux butées (31a, 31b) mutuellement dirigées l'une vers l'autre et agissant sur des côtés respectivement en regard des extrémités de ressort (22a, 22b) du premier élément de liaison par friction (22),
- dans lequel, en cas d'entraînement par le moteur électrique, le deuxième élément de liaison par friction (23) transmet le couple de rotation engendré du côté de l'entraînement, à partir de l'élément d'entraînement (20) à l'élément de sortie d'entraînement (25), et
- dans lequel, en cas d'actionnement manuel du composant de fermeture (2), l'élément de transmission (21) transmet le couple de rotation engendré du côté sortie d'entraînement, au premier élément de liaison par friction (22) et neutralise son blocage par rapport à la première surface de contact (28) associée.

2. Système d'entraînement (1) selon la revendication 1,
**caractérisé**
**par** un élément de ressort (36) qui est enserré entre les extrémités de ressort (22a, 22b) du premier élément de liaison par friction (22), agit notamment en tant que ressort de compression, et est de préférence interchangeable.

3. Système d'entraînement (1) selon la revendication 1 ou la revendication 2,
**caractérisé**
**par** une pièce en forme de fourreau (24), fixe, dont la paroi intérieure cylindrique forme la première surface de contact (28) interagissant avec le premier élément de liaison par friction (22).

4. Système d'entraînement (1) selon l'une des revendications 1 à 3,
**caractérisé**
**en ce que** l'élément de sortie d'entraînement (25) présente des premières butées (35a, 35b) et l'élément d'entraînement (20) des deuxièmes butées (34a, 34b), les butées (34a, 34b ; 35a, 35b) agissant sur des côtés opposés d'extrémités de ressort (23a, 23b) du deuxième élément de liaison par friction (23).

5. Système d'entraînement (1) selon l'une des revendications 1 à 4,
**caractérisé**
**en ce que** l'élément d'entraînement (20) et l'élément de sortie d'entraînement (25) présentent chacun un corps allongé cylindrique (27, 26), les corps allongés (27, 26) étant guidés l'un dans l'autre et étant mutuellement couplés à l'aide d'éléments d'assemblage (33, 35) agissant à la manière d'une liaison par rainure et languette.

6. Système d'entraînement (1) selon la revendication 5,
**caractérisé**
**en ce que** le deuxième élément de liaison par friction (23) s'engage, avec ses extrémités de ressort (23a, 23b), à l'intérieur de la liaison par rainure et languette, entre les éléments d'assemblage (33, 35) de l'élément de sortie d'entraînement (25) et de l'élément d'entraînement (20).

7. Système d'entraînement (1) selon l'une des revendications 1 à 6,
**caractérisé**
**en ce que** l'élément d'entraînement (20) et/ou l'élément de sortie d'entraînement (25) présentent des éléments de couplage (37, 38) du type crabots destinés au raccordement du moteur ou d'un réducteur sur le côté entraînement, et respectivement au raccordement d'une broche ou vis du côté de la sortie d'entraînement.

8. Système d'entraînement (1) selon l'une des revendications 1 à 7,
**caractérisé**
**par** deux fourreaux de carter (9, 10) s'engageant l'un dans l'autre de manière télescopique et destinés à recevoir le moteur électrique (11), le cas échéant le réducteur (12), le dispositif d'accouplement (13), des moyens (14, 15) pour le déplacement longitudinal relatif des deux fourreaux de carter (9, 10), notamment une vis (14) avec son écrou de vis (15), ainsi qu'un certain nombre de ressorts (17) montés en série et/ou en parallèle et agissant dans la direction longitudinale (8) du carter.

9. Système d'entraînement (1) selon l'une des revendications 1 à 8,
**caractérisé**
**en ce que** le dispositif d'accouplement (13) est placé à la suite, savoir en aval, du réducteur (12) couplé au moteur électrique (11).

10. Système d'entraînement (1) selon la revendication 8 ou la revendication 9,
**caractérisé**
**en ce que** la courbe de la force (F₁, F₂) composée de la friction du dispositif d'accouplement (13) et de la force de ressort du ou de chaque ressort (17) est conçue de façon à ce que la force de rappel active du composant de fermeture (2) soit compensée indépendamment de la position le long de l'angle d'ouverture (α), et, dans le cas d'un actionnement automatique du composant de fermeture (2), se situe au-dessus d'une courbe de force de moteur (F₃) représentant un mouvement d'ouverture du composant de fermeture (2), respectivement en-dessous d'une courbe de force de moteur (F₄) représentant un mouvement de fermeture, qui varient en fonction de l'angle d'ouverture (α).
